# EUROPÄISCHE PATENTANMELDUNG

(11) **EP 1 622 023 A1**
(43) Veröffentlichungstag der Anmeldung: **01.02.2006**
(21) Anmeldenummer: 04017689.3
(22) Anmeldetag: 26.07.2004
(51) Int. Cl.: G06F 11/36

(54) **Software-Entwicklungsumgebung mit integrierter Testumgebung**

(71) Anmelder: SIEMENS AKTIENGESELLSCHAFT, 80333 München (DE)
(72) Erfinder: Augustin, Martin, Dr., 76227 Karlsruhe (DE); Denzlein, Michael, 91056 Erlangen (DE); Glas, Vitus, 90768 Fürth (DE); Helm, Mathias, 91056 Erlangen (DE); Höfler, Werner, 90542 Eckental (DE); Kittel, Stephan, 91056 Erlangen (DE); Pigan, Raimond, 91052 Erlangen (DE)

(57) **Zusammenfassung**

Die Erfindung betrifft eine Vorrichtung und ein Verfahren zur Entwicklung von Software-Systemen mit einer Entwicklungsumgebung zur Erstellung von Softwarefunktionen und einer in die Entwicklungsumgebung integrierten Testumgebung zum Testen des erstellten Codes mindestens einer Softwarefunktion. Damit ist eine einfache Testumgebung angegeben, mittels derer Testfälle aufwandsarm abgearbeitet werden können.

## Beschreibung

Die Erfindung betrifft eine Vorrichtung und ein Verfahren zur Entwicklung von Software-Systemen.

Bei der Entwicklung von Software-Systemen unterscheidet man generell unterschiedliche Phasen von Entwicklung und anschließendem Test der entwickelten Software. Der erste Test des erzeugten Codes, der sogenannte Modultest, wird in der Regel noch vom Entwickler der Software-Funktion selbst durchgeführt. Die Entwicklung der Software-Funktion und der erste Test finden heute in der Regel in getrennten Umgebungen statt. Für die Entwicklung existieren umfangreiche IDEs (Integrated **D**evelopment **E**nvironment). Für den Test existieren allenfalls zusätzliche Frameworks, wenn sie überhaupt vorhanden sind. Eine derartige Trennung führt zu umständlichen manuellen Tätigkeiten bei der Synchronisation der Inhalte und zu längeren Rückkopplungs-Schleifen, d.h., der Zeit, die für das Finden eines Fehlers, das Lokalisieren und das Beheben nötig ist. Auf einer höheren Ebene, beispielsweise der eines Projektleiters, der für eine Menge von Entwicklern verantwortlich ist, ist bisher keine objektive Möglichkeit gegeben, den Fortschritt der einzelnen Modultests zu überwachen.

Im Rahmen eines Modultests werden die einzelnen Variablen-Zugriffe und Aufrufe von Unter-Methoden oder -Funktionen der entwickelten Software-Funktionen überprüft. Damit im Testumfeld ein entsprechender Testfall vom Entwickler abgearbeitet werden kann, müssen die Variablen bzw. Unter-Funktionen, die von der Software-Funktion verwendet werden bzw. aufgerufen werden, während des Zeitpunkts des Tests zur Verfügung stehen. Wenn also eine einzelne Software-Funktion getestet werden soll, ist für diese Funktion eine umfangreiche Vorarbeit nötig: Bibliotheken, Objekte, Applikations-Umgebungen und Schnittstellen, die von der Funktion aufgerufen oder benutzt werden, sind vorher zu starten und entsprechend zu initialisieren. Dies kann im benötigten Test-Code und vor allem für den Zeitablauf sehr aufwendig sein. Sämtliche Applikationen müssten gestartet, initialisiert und nach dem Durchlauf des Testfalls wieder beendet werden. Hinzukommt, dass die Randbedingungen sich für jeden Testfall minimal unterscheiden und man somit den einmal geschriebenen Test-Code nur selten wieder verwenden kann. Aus diesem Grund umfasst der Test-Code etwa zwei Größenordnungen mehr Lines of Code als der zu testende Code.

Heutzutage werden die Instanziierung und Initialisierung über die Verwendung der sogenannten Stub-Technik begrenzt. Mit Hilfe der Stub-Technik werden aufgerufene Funktionen auf eine Ersatzfunktion umgelenkt. Diese Ersatzfunktion enthält nicht die ursprüngliche Funktionalität, sondern zeigt nur spezielle Reaktionen für den jeweiligen Testfall. Mittels der Stub-Technik können jedoch nur aufgerufene Unterfunktionen durch einfachere Alternativen ersetzt werden. Variablen-Zugriffe setzen weiterhin noch existierende Instanzen der Variable voraus.

Aufgabe der vorliegenden Erfindung ist daher, eine einfache Testumgebung anzugeben, mittels derer Testfälle aufwandsarm abgearbeitet werden können.

Die Aufgabe wird gelöst durch eine Vorrichtung zur Entwicklung von Software-Systemen mit einer Entwicklungsumgebung zur Erstellung von Softwarefunktionen und einer in die Entwicklungsumgebung integrierten Testumgebung zum Testen des erstellten Codes mindestens einer Softwarefunktion.

Die Aufgabe wird weiterhin gelöst durch ein Verfahren zur Entwicklung von Software-Systemen, bei dem mindestens eine Software-Funktion in einer Entwicklungsumgebung erstellt wird und bei dem der erstellte Code, der mindestens einen Software-Funktion mittels einer in die Entwicklungsumgebung integrierten Testumgebung getestet wird.

Der Erfindung die Erkenntnis zugrunde, dass eine nahtlose Integration einer Testumgebung in die zugehörige IDE (Entwicklungsumgebung) die Bearbeitung von Testfällen für den Entwickler enorm erleichtert. Als Ergebnis eines durchgeführten Tests werden die Testergebnisse an der entsprechenden Stelle angezeigt, zu der sie gehören, also z.B. an der getesteten Funktion oder dem Objekt-Interface.

Die erfindungsgemäße Vorrichtung führt durch die Verknüpfung von Informationen, die bisher nur getrennt vorgelegen haben, zu einem enormen Vorteil, da Feedback-Schleifen verkürzt werden. Dies generiert einen Mehrwert im Rahmen der Entwicklung von Software-Systemen. Hierbei erfolgt die Zuordnung der Informationen automatisch, da der Test in der gleichen Umgebung wie die Entwicklung durchgeführt wird. Es ist durch die erfindungsgemäße Vorrichtung nicht mehr nötig, die Positionsangaben der Testergebnisse manuell mit dem getesteten Code der Funktion zu synchronisieren, um z.B. den fehlgeschlagenen Testfall zu prüfen. Ein Klick auf die entsprechende Fehlermeldung oder Anzeige des Testfalls reicht aus, um ein Sprung an die jeweilige Stelle im Code herbeizuführen.

Weitere vorteilhafte Ausführungen der Erfindung sind in den Unteransprüchen aufgeführt.

Mit Hilfe der erfindungsgemäßen Vorrichtung sind Status-Informationen wie z.B. "Test vollständig" oder "Test unvollständig", die ebenfalls direkt an der zugehörigen Funktion angezeigt werden, darstellbar. Hinzukommt, dass eine Verdichtung der Testergebnisse über die zu testende Funktion hinaus ermöglicht wird. Hierbei sind als nächste Ebenen Objekte, Bibliotheken und Projekte darstellbar. Durch diese erfindungsgemäße Ausbildung der Vorrichtung erhält beispielsweise ein Projektleiter objektive Informationen über den Durchführungsgrad und den Fortschritt der einzelnen Modultests der jeweiligen Entwickler.

Eine weitere vorteilhafte Ausbildung der Erfindung ist dadurch gekennzeichnet, dass eine zusätzliche Isolation bzw. Umlenkung sämtlicher Variablen-Zugriffe mit Hilfe der erfindungsgemäßen Vorrichtung erfolgt. Hierbei wird nicht das komplette Objekt simuliert bzw. umgelenkt, sondern der Zugriff richtet sich nur auf die eigentliche Variable. Der Teil eines Objekts, der nicht der Variable entspricht, kann hierbei als zusätzliche Adressierung aufgefasst werden und damit die Umlenkung der Variablen-Zugriffe wesentlich erleichtern. Die Umlenkung der Variable erfolgt erfindungsgemäß mittels eines Tests-Frameworks.

Vorteilhaft ist hierbei, dass die Komplexität der Variablen-Zugriffe in heutzutage vorhandenen Objekt-Strukturen auf die Variable am Ende der Namens-Kette konzentriert wird und dadurch eine Simulation erlaubt. Komplexe Initialisierungen weiterer Applikationen, die von der Funktion benötigt werden, sind in diesem Fall nicht mehr notwendig. Damit ist der Aufwand für die Implementierung eines Testfalls wesentlich kleiner als bisher.

Bisher musste beispielsweise für einen Variablen-Zugriff der Form MyObject1.MemberOfMyObject1.Submember.Variable die gesamte Kette an Objekten (MyObject1, memberOfmyObject1, Submember und Variable) instanziiert werden. Innerhalb der zugreifenden Funktion ist aber nur der Wert der Variablen interessant, z.B. für eine Entscheidung oder für lesenden oder schreibenden Zugriff. Die gesamte Kette ist nur für die reale Adressierung der Variablen wichtig.

Deshalb ist es für ein Testsystem ausreichend nur die Variable oder stattdessen einen Repräsentanten des gleichen Datentyps zu instanziieren und den Zugriff darauf umzulenken.

Im Folgenden wird die Erfindung anhand der in den Figuren dargestellten Ausführungsbeispiele näher beschrieben und erläutert. Es zeigen:
- FIG 1: eine beispielhafte Darstellung der Vorrichtung mit in die Entwicklungsumgebung integrierter Testumgebung,
- FIG 2: eine schematische Darstellung der Umlenkung von Variablen mittels des Test-Frameworks.

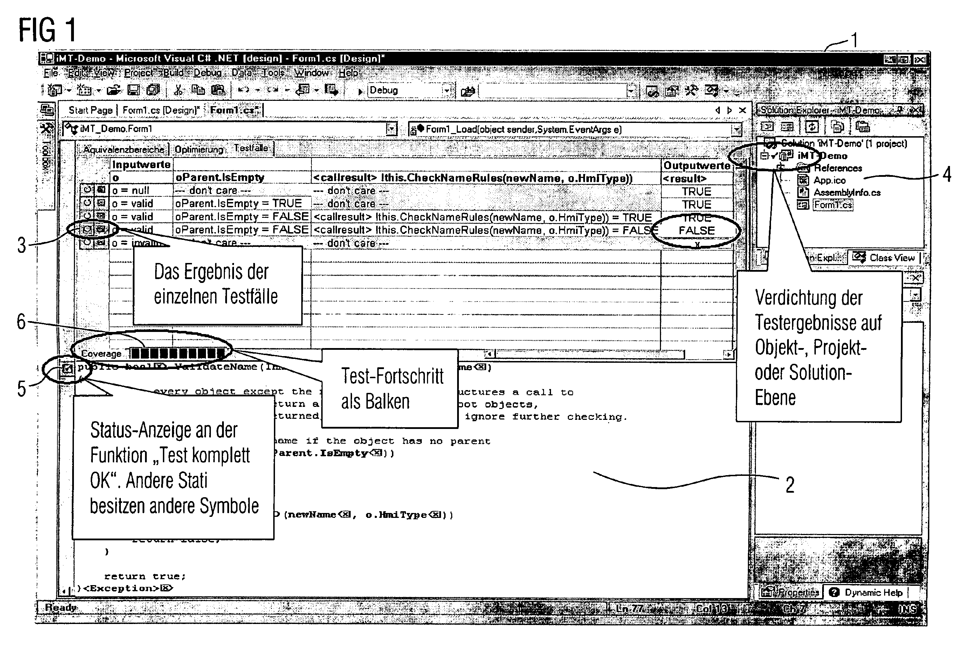

FIG 1 zeigt eine Entwicklungsumgebung 1 mit einer integrierten Testumgebung 2 zur Abarbeitung von Testfällen, insbesondere im Rahmen des entwicklungsnahen Modultests. Das Ergebnis der einzelnen Testfälle kann mit ersten Mitteln 3 zur Anzeige der Testergebnisse direkt an der getesteten Software-Funktion angezeigt bzw. dargestellt werden. Eine Verdichtung der Testergebnisse, beispielsweise auf höheren Ebenen zur Information des Projektleiters, ist durch erfindungsgemäße Vorrichtung mit Hilfe der zweiten Mittel 4 zur Verdichtung möglich. Die Verdichtung der Testergebnisse kann auf Objekt-, Projekt- oder Solution-Ebene erfolgen. Die verdichteten Testergebnisse werden mit Hilfe der zweiten Mittel 4 zur Verdichtung ebenfalls direkt im Rahmen der erfindungsgemäßen Vorrichtung, also innerhalb der Entwicklungsumgebung 1 dargestellt. Die Vorrichtung verfügt über dritte Mittel 5, mit deren Hilfe eine Status-Anzeige an der zu testenden Software-Funktion ermöglicht wird. Die Status-Anzeige kann beispielsweise anzeigen, dass der Test komplett durchgeführt wurde. Verschiedene andere Stati sind ebenfalls denkbar: Beispielsweise kann angezeigt werden, dass der Test noch durchgeführt wird. Es ist ebenso denkbar, dass angezeigt wird, wie oft eine zu testende Funktion den Test bereits durchlaufen hat. Mittels eines Fortschritt-Balkens 6 kann im Rahmen der erfindungsgemäßen Vorrichtung der Test-Fortschritt angezeigt werden. Insgesamt werden durch die erfindungsgemäße Vorrichtung im Rahmen einer Entwicklungsumgebung 1 durch die integrierte Testumgebung 2 die im Umfeld des Modultests relevanten anfallenden Informationen direkt an der zu testenden Funktion bzw. in verdichteter Form dargestellt.

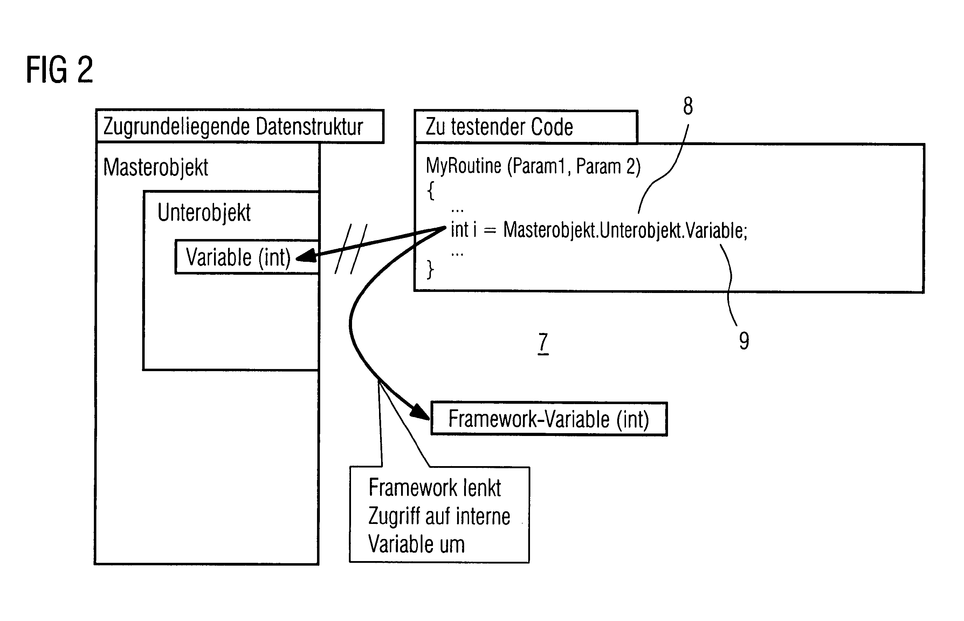

FIG 2 zeigt ein weiteres Ausführungsbeispiel der erfindungsgemäßen Vorrichtung. Hierbei wird im Rahmen des Modultests ein Test-Framework 7 verwendet, welches Variablen-Zugriffe auf interne, simulierte Variablen umlenkt. Bei einem zu testenden Code werden die vorhandenen Objekt-Strukturen 8 derart interpretiert, dass ausschließlich die Variable 9 am Ende der Namens-Kette betrachtet wird. Dies erlaubt einen simulierten Zugriff innerhalb des Test-Frameworks 7. Hierbei muss die simulierte Variable auf ihren Startwert gesetzt werden, dies erfolgt automatisch durch das Test-Framework.

Durch die 100 %-ige Isolation der zu testenden Funktion erübrigt sich die Initialisierung der von der Funktion benötigten weiteren Applikationen. Der Test der Funktion kann autark durchgeführt werden, ohne dass auf die Fertigstellung, beispielsweise von Kollegen-Code gewartet werden muss. Zusätzlich ermöglicht die erfindungsgemäße Vorrichtung einen von einer Plattform oder einem Betriebssystem unabhängigen Test.

## Patentansprüche

1. Vorrichtung zur Entwicklung von Software-Systemen, mit
• einer Entwicklungsumgebung (1) zur Erstellung von Software-Funktionen und
• einer in die Entwicklungsumgebung integrierten Testumgebung (2) zum Testen des erstellten Codes mindestens einer Software-Funktion.

2. Vorrichtung nach Anspruch 1, mit ersten Mitteln (3) zur Anzeige der Testergebnisse an der mindestens einen getesteten Software-Funktion.

3. Vorrichtung nach Anspruch 1 oder 2, mit zweiten Mitteln (4) zur Verdichtung der Testergebnisse und/oder zur Anzeige von verdichteten Testergebnissen.

4. Vorrichtung nach einem der vorhergehenden Ansprüche, mit dritten Mitteln (5) zur Anzeige von Status-Informationen zu der mindestens einen getesteten Software-Funktion, wobei unterschiedliche Symbole für die Anzeige verschiedener Stati vorgesehen sind.

5. Vorrichtung nach einem der vorhergehenden Ansprüche, mit einem Test-Framework (7) zur Umlenkung eines Variablen-Zugriffs eines Objekts der zu testenden Software-Funktion auf eine interne, simulierte variable (8).

6. Vorrichtung nach Anspruch 5, bei der ein Teilbereich (9) des Objekts als Adressierung vorgesehen ist.

7. Verfahren zur Entwicklung von Software-Systemen, bei dem mindestens eine Software-Funktion in einer Entwicklungsumgebung erstellt wird und bei dem der erstellte Code der mindestens einen Software-Funktion mittels einer in die Entwicklungsumgebung integrieren Testumgebung getestet wird.

8. Verfahren nach Anspruch 7, bei dem die Testergebnisse an der mindestens einen getesteten Funktion angezeigt werden.

9. Verfahren nach Anspruch 7 oder 8, bei dem Testergebnisse verdichtet und/oder angezeigt werden.

10. Verfahren nach einem der Ansprüche 7 bis 9, bei dem Status Informationen zu der mindestens einen getesteten Software-Funktion angezeigt werden, wobei unterschiedliche Symbole für die Anzeige unterschiedlicher Stati verwendet werden.

11. Verfahren nach einem der Ansprüche 7 bis 10, bei dem ein Variablen-Zugriff eines Objekts der mindestens einen zu testenden Software-Funktion mittels eines Test-Frameworks auf eine interne, simulierte Variable umgelenkt wird.

12. Verfahren nach Anspruch 11, bei dem ein Teilbereich des Objekts als Adressierung verwendet wird.
